# EUROPÄISCHE PATENTSCHRIFT

(11) **EP 4 265 465 B1**
(45) Veröffentlichungstag und Bekanntmachung des Hinweises auf die Patenterteilung: **11.12.2024**
(21) Anmeldenummer: 23164597.9
(22) Anmeldetag: 28.03.2023
(51) Int. Cl.: B60L 5/38, H01R 41/00, B60L 5/20

(54) **SCHLEIFKONTAKTHALTER, SCHLEIFKONTAKT, STROMABNEHMER UND SCHLEIFLEITUNGSSYSTEM**
SLIDING CONTACT HOLDER, SLIDING CONTACT, CURRENT COLLECTOR AND SLIDING CONTACT SYSTEM
SUPPORT DE CONTACT À FROTTEMENT, CONTACT À FROTTEMENT, COLLECTEUR DE COURANT ET SYSTÈME DE LIGNE À FROTTEMENT

(30) Priorität: 31.03.2022 DE 102022107705
(43) Veröffentlichungstag der Anmeldung: 25.10.2023
(73) Patentinhaber: Conductix-Wampfler GmbH, 79576 Weil am Rhein (DE)
(72) Erfinder: Seidel, Dieter, 79585 Steinen (DE)
(74) Vertreter: Charrier Rapp & Liebau

(56) Entgegenhaltungen:
- EP-A1- 0 002 627
- EP-B1- 3 333 007

## Beschreibung

Die Erfindung betrifft einen Schleifkontakthalter nach dem Oberbegriff des Anspruchs 1 einen Stromabnehmer nach dem Oberbegriff des Anspruchs 12 sowie ein Schleifleitungssystem nach dem Oberbegriff des Anspruchs 13.

Aus dem Stand der Technik sind Stromabnehmer mit Schleifkontakthaltern bekannt, in die in der Regel fest in die Schleifkontakthalter eingebundene Schleifkontakte enthalten sind. Hierdurch kann eine gute elektrische Verbindung zwischen einem Schleifkontaktanschluss des Stromabnehmers und dem Schleifkontakt, welcher in eine Stromschiene des Schleifleitungssystems eingreift, hergestellt werden. Nachteilig ist j edoch, dass bei abgenutzten Schleifkontakten stets der Schleifkontakthalter gemeinsam mit dem Schleifkontakt ausgetauscht werden muss, wobei der Schleifkontakthalter in der Regel fest an einem entsprechenden Haltemechanismus des Stromabnehmers befestigt ist, beispielsweise angeschraubt.

Die EP 0 002 627 A1 offenbart eine Bürste für den Kollektor eines Wagens, der in einer elektrifizierten Einschienenbahn fährt, die in Umschlaganlagen eingesetzt wird. Diese Bürste umfasst einen Sockel aus isolierendem Material, der mit Schnappbefestigungsmitteln ausgestattet ist, die fest mit elektrisch leitenden Elementen verbunden sind, die mit dem Kollektor verbunden sind und in die ein vorstehendes Teil eines Schleifkontakts aus leitendem Material eingreift, wobei messerförmige Kontaktfinger den Schleifkontakt halten.

Die EP 3 333 007 B1 offenbart eine Schleifleiste für einen Stromabnehmer eines Schienenfahrzeugs, umfassend eine erste und zweite Leiste aus Kohlenstoff, die sich parallel zu einer Längserstreckungsrichtung und beiderseits einer Längserstreckungsebene, welche die Längserstreckungsrichtung umfasst, erstrecken, weiter umfassend einen Metalleinsatz, der sich entlang der Längserstreckungsrichtung in der Längserstreckungsebene erstreckt und zwischen der ersten und zweiten Kohlenstoffleiste vorgesehen ist, und einen Stromkollektorträger, an dem die erste und zweite Kohlenstoffleiste und der Metalleinsatz angebaut sind.

Aufgabe der Erfindung ist es deshalb, einen Schleifkontakthalter, einen Stromabnehmer sowie ein Schleifleitungssystem bereitzustellen, welche die oben genannten Nachteile überwinden und eine möglichst kompakte und schwingungsunempfindliche Ausgestaltung des Stromabnehmers bereitstellen.

Die Erfindung löst diese Aufgabe durch einen Schleifkontakthalter mit den Merkmalen des Anspruchs 1, einen Stromabnehmer nach dem Oberbegriff des Anspruchs 12 sowie ein Schleifleitungssystem nach dem Oberbegriff des Anspruchs 13. Vorteilhafte Weiterbildungen und Ausgestaltungen der Erfindung sind in den Unteransprüchen angegeben.

Ein eingangs genannter Schleifkontakthalter ist erfindungsgemäß dadurch gekennzeichnet, dass freie Enden der Haltelamellen schräg in den von der Schleifkontaktaufnahme umgebenen Innenraum ragen, wobei benachbarte Haltelamellen zueinander parallel verlaufen.

Bevorzugt können die freien Enden der Haltelamellen entgegen einer Einsteckrichtung des Schleifkontakts in die Schleifkontaktaufnahme schräg in den von der Schleifkontaktaufnahme umgebenen Innenraum ragen.

Um einen verbesserten Sitz des Schleifkontakts im Schleifkontakthalter zu gewährleisten, können die freien Enden der Haltelamellen scharfkantig sein, so dass sie sich etwas in den Schleifkontakt eingraben können.

Bevorzugt können die Haltelamellen fischgrätartig in den Innenraum ragen, insbesondere also in einer Höhenrichtung der Schleifkontaktaufnahme übereinander oder in der Zustellrichtung bzw. Einsteckrichtung des Schleifkontakts bzw. der Höhenrichtung der Schleifkontaktaufnahme nebeneinander angeordnet sind, so dass aufgrund der Vielzahl von übereinander oder nebeneinander angeordneten Haltelamellen zum einen ein sicherer Sitz gewährleistet ist, und dass bei einer kleinen Anzahl von beschädigten Haltelamellen dennoch der Sitz in der Schleifkontaktaufnahme gewährleistet ist. Bevorzugt können freie Enden der Haltelamellen zur Anlage an den Schleifkontakt ausgebildet sein.

Weiter können vorteilhaft die Haltelamellen auf mindestens einer Seitenwandung des Innenraums der Schleifkontaktaufnahme angeordnet sein, was fertigungstechnisch günstig ist. Ggf. können zusätzlich auf einer der mindestens einen Seitenwandung gegenüberliegenden Seitenwandung des Innenraums der Schleifkontaktaufnahme weitere in den Innenraum ragende Haltelamellen angeordnet sein, wodurch der Sitz verbessert werden kann.

Bevorzugt können die Haltelamellen in eine zur Längsrichtung des die Schleifleitung kontaktierenden Schleifkontakts parallelen Richtung verlaufen, so dass die Haltelamellen beim Einstecken des Schleifkontakts in die Schleifkontaktaufnahme zur Seite gedrückt und dabei gespannt werden, um beim Herausziehen des Schleifkontakts an den Wandungen des Schleifkontakts gegen die Einsteckrichtung wirken.

Weiter können die Haltelamellen in einer zur Einsteckrichtung des Schleifkontakts in die Schleifkontaktaufnahme parallelen Richtung verlaufen. Auch hierbei werden die Haltelamellen beim Einstecken des Schleifkontakts seitlich weggedrückt und dabei gegen die Wandungen des Schleifkontakts gedrückt, um dem Herausziehen des Schleifkontakts einen Widerstand entgegenzusetzen.

Weiter kann bevorzugt bei nicht eingestecktem Schleifkontakt der Abstand zwischen auf einander gegenüberliegenden Seiten des Innenraums angeordneten Haltelamellen oder zwischen einer Seite des Innenraums und auf der gegenüberliegenden Seite des Innenraums angeordneten Haltelamellen kleiner sein als die Breite des Einsteckbereichs quer zur und/oder in Längsrichtung.

Bevorzugt können die Schleifkontaktaufnahme und/oder die Haltelamellen aus einem elektrisch leitfähigen Material bestehen, um so eine möglichst einfache und gute elektrische Verbindung zwischen Schleifkontakt und Schleifkontaktaufnahme bereitzustellen.

Um einen verbesserten Sitz des Schleifkontakts im Schleifkontakthalter zu ermöglichen, sind die Haltelamellen elastisch bzw. weisen elastische Eigenschaften auf, um sich möglichst gut und dauerhaft an den Schleifkontakt anlegen bzw. in diesen eingraben zu können. Bevorzugt können die Haltelamellen weiter aus einem Material bestehen, welches härter ist als das Material, aus dem der Schleifkontakt besteht, wodurch sich die Haltelamellen noch besser in den Schleifkontakt eingraben und einen sicheren Halt gewährleisten können.

In einer vorteilhaften Weiterbildung können die Schleifkontaktaufnahme und die Haltelamellen einstückig ausgebildet sein, so dass zum einen eine gute elektrische Durchleitung ohne Übergangswiderstand und zum anderen eine einfache Fertigung möglich ist. Zudem besteht dann keine Gefahr, dass sich die Haltelamellen von der Schleifkontaktaufnahme lösen und der Schleifkontakt nicht mehr sicher in der Schleifkontaktaufnahme gehalten wird. Bevorzugt kann der Schleifkontakthalter aus einem elektrisch leitfähigen Material bestehen. Alternativ kann der Schleifkontakthalter aus einem elektrisch isolierenden Material, insbesondere Kunststoff bestehen, wobei die Haltelamellen dann bevorzugt aus einem elektrisch leitfähigen Material bestehen und bevorzugt elektrisch leitend mit dem Schleifkontaktanschluss verbunden sind. Hierdurch kann der Schleifkontakthalter den Schleifkontakt nach außen hin elektrisch isolieren, während die Haltelamellen bevorzugt in den Schleifkontakthalter eingegossen sein können, was die Herstellung des Schleifkontakthalters vereinfacht.

Ein eingangs genannter Stromabnehmer ist erfindungsgemäß dadurch gekennzeichnet, dass der Schleifkontakthalter wie oben und nachfolgend beschrieben ausgebildet ist bzw. sind. Die Verwendung eines solchen Stromabnehmers ermöglicht kurze Rüstzeiten und Wartungszeiten für den Einsatz neuer Schleifkontakte insbesondere beim Austausch abgenutzter Schleifkontakte.

Ein eingangs genanntes Schleifleitungssystem ist erfindungsgemäß dadurch gekennzeichnet, dass der Stromabnehmer wie oben und nachfolgend beschrieben ausgebildet ist. Ein derartiges Schleifleitungssystem erlaubt den schnellen und einfachen Austausch von verbrauchten und/oder defekten Schleifkontakten.

Bevorzugt kann die Längsrichtung der Schleifleitung der Längserstreckung des in die Schleifkontaktaufnahme eingesteckten Schleifkontakts entsprechen. Weiter kann vorteilhaft die Einsteckrichtung des Schleifkontakts in die Schleifkontaktaufnahme senkrecht zur Längsrichtung und/oder senkrecht zur Quererstreckung des Schleifkontakts bzw. senkrecht zu einer Querrichtung, welche senkrecht zur Längsrichtung und zu einer Zustellrichtung des Schleifkontakts zur Schleifleitung verläuft, sein.

Unter im Wesentlichen parallel wird hier und im nachfolgenden keine mathematisch exakte Parallelität verstanden, sondern auch geringfügige Abweichungen von der Parallelität um wenige Winkelgrade, welche z.B. durch Abnutzungserscheinungen, Witterungseinflüsse, Temperatureinflüsse, produktionstechnische Ungenauigkeiten und Toleranzen, nicht exakt geradlinig verlaufende oder montierte Schleifleitungen oder auch aus andere Gründe entstehen können.

Die Erfindung wird nachfolgend anhand von detaillierten Ausführungsbeispielen mit Bezug auf die begleitenden Zeichnungen beschrieben. Diese zeigen:
- **Fig. 1**: eine zum Teil aufgebrochene dreidimensionale Schrägansicht eines erfindungsgemäßen Schleifleitungssystems;
- **Fig. 2**: eine Frontansicht eines erfindungsgemäßen Stromabnehmers aus Fig. 1;
- **Fig. 3**: eine Schnittansicht durch den Stromabnehmer aus Fig. 2 längs der Linie A-A;
- **Fig. 4**: eine Schnittansicht auf einen Schleifkontakthalter des Stromabnehmers aus Fig. 3 längs der Linie B-B ohne darin eingesetzten Schleifkontakt;
- **Fig. 5**: eine Frontansicht eines alternativen erfindungsgemäßen Stromabnehmers;
- **Fig. 6**: eine Schnittansicht durch den Stromabnehmer aus Fig. 5 längs der Linie C-C;
- **Fig. 7**: eine Schnittansicht auf einen Schleifkontakthalter des Stromabnehmers aus Fig. 6 längs der Linie D-D ohne darin eingesetzten Schleifkontakt;
- **Fig. 8**: eine vergrößerte Schnittansicht des Details E aus Fig. 6.

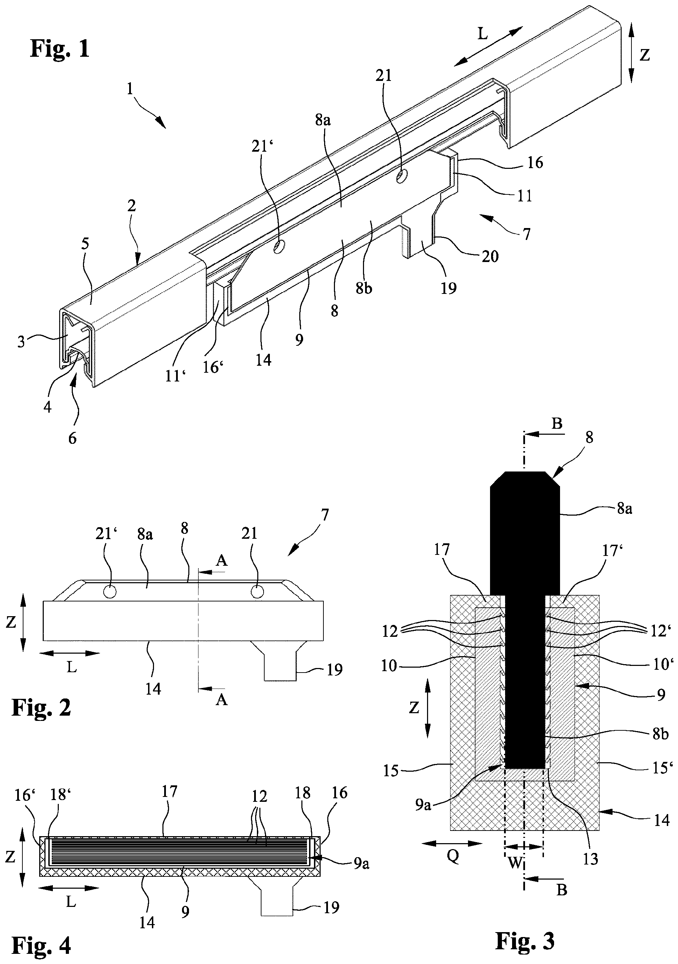

Fig. 1 zeigt eine zum Teil aufgebrochene dreidimensionale Schrägansicht eines erfindungsgemäßen Schleifleitungssystems 1 mit einer an sich bekannten, in eine Längsrichtung L verlaufenden Schleifleitung 2. Je nach Anwendung können auch mehrere solche Schleifleitungen 2 nebeneinander angeordnet werden, aus Gründen der Übersichtlichkeit wird die Erfindung vorliegend jedoch nur anhand der einen Schleifleitung 2 beschrieben.

Die Schleifleitung 2 weist ein Leiterprofil 3 mit einem trogförmigen Schleifabschnitt 4 aus einem elektrisch leitenden Material auf. Je nach Anwendung und insbesondere der Höhe des zu übertragenden elektrischen Stroms kann auch das ganze Leiterprofil 3 aus einem elektrisch leitenden Material oder einer Kombination unterschiedlicher elektrische leitender Materialien bestehen. Die Stromschiene 4 ist von einem Isolierprofil 5 aus einem elektrisch isolierenden Material umgeben und dient u.a. als Berührungsschutz für Bedienpersonal und zum Verhindern von Erdschlüssen und, bei mehreren nebeneinander angeordneten Schleifleitungen 2, von Leiterschlüssen zwischen Stromschienen der nebeneinander angeordneten Schleifleitungen 2. Auf der in Fig. 1 nach unten weisenden Seite weist die Schleifleitung 2, also insbesondere auch das Isolierprofil 5 und das Leiterprofil 3 einen in Längsrichtung L verlaufenden Längsschlitz 6 auf. Die obige Ausgestaltung ist dem Fachmann grundsätzlich bekannt und Bedarf keiner vertieften Erläuterung.

Um einen zumindest in die Längsrichtung L längs der Schleifleitung 2 verfahrbaren elektrischen Verbraucher mit Strom aus dem Leiterprofil 3 versorgen zu können, ist ein in den Zeichnungen nur teilweise gezeigter Stromabnehmer 7 vorgesehen. Weitere nicht gezeigte Teile des Stromabnehmers 7, wie beispielsweise eine Zustellvorrichtung zum Bewegen und dauerhaften Halten gegen die Schleifleitung 2 oder Mittel zum Befestigen an dem elektrischen Verbraucher sind aus Gründen der Übersichtlichkeit weggelassen und im übrigen dem Fachmann bekannt.

Der Stromabnehmer 7 weist einen Schleifkontakt 8 mit einem Schleifbereich 8a auf, welcher zur elektrischen Kontaktierung mit dem trogförmigen Schleifabschnitt 4 des Leiterprofils 3 mittels einer nicht gezeichneten Zustellvorrichtung in eine Zustellrichtung Z durch den Längsschlitz 6 hindurch zum Schleifabschnitt 4 hin bewegt und beständig daran angedrückt werden kann. In dem Schleifbereich 8a wird der Schleifkontakt 8 zur elektrischen Kontaktierung des trogförmigen Schleifabschnitts 15 durch den Längsschlitz 6 des Isolierprofils 3 in Verbindung mit dem Leiterprofil 4 gebracht.

Weiter weist der Schleifkontakt 8 einen Einsteckbereich 8b auf, mit dem der Schleifkontakt 8 in Zustellrichtung Z von in den Zeichnungen oben in einen Innenraum 9a einer entsprechend ausgebildeten Schleifkontaktaufnahme 9 des Stromabnehmers 7 eingesteckt werden kann. Dabei ist der Einsteckbereich 8b in eine quer zur Längsrichtung L und zur Zustellrichtung Z verlaufenden Querrichtung Q bevorzugt schmaler als der Schleifbereich 8a. Die beiden Bereich 8a, 8b können aber auch dieselbe Breite oder andere Breitenverhältnisse aufweisen.

Die Schleifkontaktaufnahme 9 weist in Längsrichtung L verlaufende und in Querrichtung Q voneinander beabstandete Seitenwandungen 10, 10' sowie jeweils stirnseitige Wandungen 11, 11' auf, welche den Innenraum 9a seitlich umgeben.

Auf ihren einander zugewandten Innenseiten, also die dem Innenraum 9a der Schleifkontaktaufnahme 9 zugewandten Seiten, weisen die Seitenwandungen 10, 10' besonders in Fig. 3 und 4 gut erkennbare, in Längsrichtung L verlaufende Haltelamellen 12, 12' auf. Wie besonders in Fig. 3 gut erkennbar, verlaufen die Haltelamellen 12, 12' dabei schräg zum Innenraum 9a hin geneigt von oben nach unten in Richtung eines Bodens 13 des Innenraums 9a der Schleifkontaktaufnahme 9, also in Zustellrichtung Z von dem Schleifbereich 8a und im Betrieb somit auch von der Schleifleitung 2 weg. Die Haltelamellen 12, 12' sind also zusätzlich auch noch von den Rastvorsprüngen 17, 17' weg nach unten geneigt. Die Anordnung der Haltelamellen 12, 12' in Höhenrichtung Z übereinander kann auch als fischgrätartig beschrieben werden, insbesondere was den Querschnitt quer zur Längsrichtung L und der Höhenrichtung Z betrifft.

Um einen sicheren Sitz des Schleifkontakts 8 in der Schleifkontaktaufnahme 9 zu gewährleisten, ist eine Breite W des Einsteckbereichs 8b des Schleifkontakts 8 in Querrichtung Q etwas breiter als der Abstand zwischen den vorderen Kanten einander gegenüberliegender, entspannter Haltelamellen 12, 12' in Querrichtung Q. Zudem sind die Haltelamellen 12, 12`etwas elastisch bzw. nachgiebig und können somit beim Einsetzen des Schleifkontakts 8 in die Schleifkontaktaufnahme 9 durch den Einsteckbereich 8b etwas zur Seite gedrückt werden. Durch diese Elastizität werden die vorderen Kanten der Haltelamellen 12, 12' dann gegen die Längsseiten des Schleifkontakts 8 im Einsteckbereich 8b gedrückt und graben sich geringfügig darin ein. Hierdurch wird im normalen Betrieb verhindert, dass der Schleifkontakt 8 aus der Schleifkontaktaufnahme 9 herausfallen kann. Bevorzugt weisen die Haltelamellen 12, 12' hierzu scharfe vordere Kanten auf, um das Eingraben in den Schleifkontakt 8 zu erleichtern und die elektrische Verbindung zwischen den beiden Teilen sicherzustellen.

Hierzu ist es vorteilhaft, wenn die Haltelamellen 12, 12' aus einem gegenüber dem Material des Schleifkontakts 8 bzw. des Einsteckbereichs 8b aus einem etwas härteren Material bestehen. Bevorzugt kann der Schleifkontakts 8 aus einem gut elektrisch leitfähigen Material, beispielsweise Aluminium, Kupfer oder Graphit oder entsprechenden Mischungen bestehen, so dass die Haltelamellen 12, 12' bevorzugt aus einem hiergegenüber härteren Material bestehen.

Um einen elektrischen Kontakt zu dem elektrischen Verbraucher herzustellen, ist die Schleifkontaktaufnahme 9 und somit auch die Haltelamellen 12, 12' aus einem elektrisch leitfähigen Material hergestellt, welche durch die feste Anlage und das teilweise Eingraben der Haltelamellen 12, 12' in den Einsteckbereich 8b des Schleifkontakts 8 eine gut elektrisch leitfähige Verbindung zu diesem herstellen.

Die Schleifkontaktaufnahme 9 wird selbst in einem Schleifkontakthalter 14 aufgenommen, der aus einem elektrisch isolierenden Material hergestellt ist. Der Schleifkontakthalter 14 weist dabei eine kastenförmige Ausgestaltung mit zwei in Längsrichtung L im Wesentlichen parallel zueinander verlaufenden Seitenwandungen 15, 15' auf, welche zusammen mit stirnseitigen Wandungen 16, 16' einen Innenraum zur Aufnahme der Schleifkontaktaufnahme 9 umgeben. An dem in Fig. 1 bis 4 oberen Ende der Seitenwandungen 15, 15' wie auch der stirnseitigen Wandungen 16, 16' sind nach innen ragende längsseitige Rastvorsprünge 17, 17' sowie stirnseitige Rastvorsprünge 18, 18` vorgesehen, welche die Schleifkontaktaufnahme 9 oben vollständig umgreifen. Gegebenenfalls können die längsseitigen Rastvorsprünge 17, 17' oder stirnseitigen Rastvorsprünge 18, 18` aber auch weggelassen werden. Die Seitenwandungen 15, 15' und die Rastvorsprünge 17, 17' umgeben gemeinsam mit den entsprechenden stirnseitigen Seitenwandungen 16, 16' und Rastvorsprüngen 18, 18` die Schleifkontaktaufnahme 9.

Im vorliegenden Ausführungsbeispiel ist die Schleifkontaktaufnahme 9 fest in den Schleifkontakthalter 14 eingegossen, wird also auf allen vier Seiten am oberen Ende durch die Rastvorsprünge 17, 17', 18, 18` zusätzlich gehalten. Der Schleifkontakthalter 14 dient auch als Berührungsschutz.

Um einen elektrisches Anschlusskabel des elektrischen Verbrauchers mit dem Schleifkontakt 8 elektrisch verbinden zu können, weist die Schleifkontaktaufnahme 9 einen Schleifkontaktanschluss 19 auf der der Schleifleitung 2 abgewandten Seite auf. Der Schleifkontaktanschluss 19 ist fest und elektrisch leitend mit dem Boden der Schleifkontaktaufnahme 9 verbunden, und bevorzugt sind beide Teile aus einem Material gefertigt, besonders bevorzugt einstückig. Es können aber auch unterschiedliche Teile und elektrisch leitfähige Materialien verwendet werden.

Weiter ist der Schleifkontaktanschluss 19 von einem Anschlusselement 20 des Schleifkontakthalters 14 umgeben, wobei das Anschlusselement 20 als zusätzliche Isolierung dient und Steckverbindungsanschlüsse und/oder -elemente aufweist, welche für entsprechende Steckerelemente eines Verbindungsanschlusses zu dem elektrischen Verbraucher vorgesehen sind.

Um den Schleifkontakt 8 gegen die Haltekraft der Haltelamellen 12, 12' einfacher aus der Schleifkontaktaufnahme 9 herausziehen zu können, sind durch den Schleifkontakt 8 gehende zwei vorliegend kreisrunde Ausnehmungen 21, 21' für ein Ausziehwerkzeug mit zwei entsprechenden Eingriffsstiften vorgesehen, welche bevorzugt an einem gemeinsamen Haltegriff angeordnet sein können. Diese werden dann in die Ausnehmungen 21, 21' eingesteckt und anschließend wird der Schleifkontakt 8 mit sanfter Gewalt aus der Schleifkontaktaufnahme 9 herausgezogen. Anstelle von zwei Ausnehmungen können aber auch nur eine oder aber mehrere Ausnehmungen oder beispielsweise Hintergriffe oder Hinterschneidungen vorgesehen werden. Ebenso können die Ausnehmungen auch anderen Querschnitt aufweisen, beispielsweise drei-, vier-, fünf-, sechs- oder mehreckigen Querschnitt. Ggf. können die Ausnehmungen auch nicht vollständig durch den Schleifkontakt 8 durchgehen, sondern lediglich auf einer und/oder beiden Längsseiten des Schleifkontakts 8 vorgesehene Vertiefungen sein, in welche ein auf beiden Längsseiten in die eine und/oder mehrere Vertiefungen eingreifendes Greifwerkzeug eingreifen können.

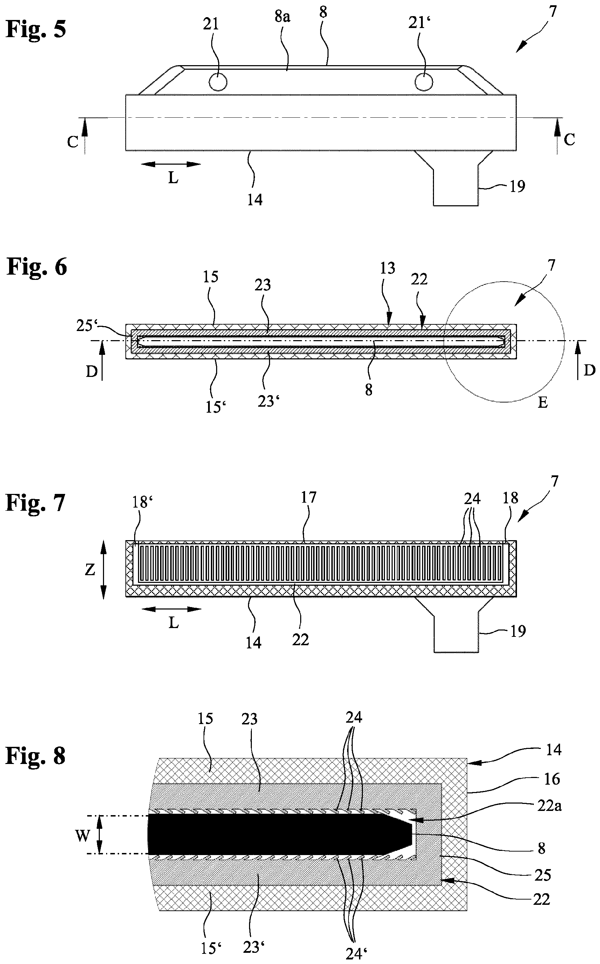

In Fig. 5 bis 8 ist wieder der Stromabnehmer 7 gezeigt, allerdings mit einer alternativen Schleifkontaktaufnahme 22, welche insbesondere in Fig. 7 und 8 gut erkennbar ist. Dabei wird nachfolgend im Wesentlichen auf die Unterschiede eingegangen, während für einander entsprechende Teile die entsprechenden gleichen Bezeichnungen und Bezugszeichen wie bei der Ausgestaltung nach Fig. 1 bis 4 verwendet werden. Für die gleichen Teile gelten die obigen Ausführungen zu Fig. 1 bis 4 entsprechend. Umgekehrt gelten auch Ausführungen zu den gleichen Teilen aus Fig. 5 bis 8 für die in Fig. 1 bis 4 gezeigten und oben beschriebenen Teile entsprechend.

Das in Fig. 5 bis 8 gezeigte Ausführungsbeispiel unterscheidet sich im Wesentlichen durch die Ausbildung der alternativen Schleifkontaktaufnahme 22. Wie gut in Fig. 8 erkennbar, weist ein Innenraum 22a der Schleifkontaktaufnahme 22 an in Längsrichtung L verlaufenden Seitenwandungen 23, 23' in Zustellrichtung Z, also Höhenrichtung der Schleifkontaktaufnahme 22 verlaufende Haltelamellen 24, 24' auf, im Gegensatz zu den in Längsrichtung L verlaufenden Haltelamellen 12, 12' des in Fig. 1 bis 4 gezeigten und oben beschriebenen Ausführungsbeispiels. Die Haltelamellen 24, 24' sind entsprechend der oben beschriebenen Haltelamellen 12, 12' hergestellt, also aus dem Material der Seitenwandungen 23, 23' herausgeformt. Sie können aber auch an den Seitenwandungen 23, 23' befestigt sein und/oder ggf. aus einem anderen Material bestehen.

Der Abstand von einander gegenüberliegenden, entspannten Haltelamellen 24, 24' ist wiederum etwas kleiner als die Breite W des Einsteckbereichs 8b des Schleifkontakts 8, so dass die elastischen Haltelamellen 24, 24' beim Einstecken des Schleifkontakts 8 wieder etwas nachgeben und dabei gespannt werden und sich dann in den Einsteckbereich 8 leicht eingraben bzw. einkrallen.

In Zustellrichtung Z verlaufen die Haltelamellen 24, 24' zueinander parallel. Dabei sind wiederum die freien vorderen Enden der Haltelamellen 24, 24' bevorzugt mit einer scharfen Kante versehen, um sich besser in den Einsteckbereich 8b des Schleifkontakts 8 eingraben zu können.

Weiter ragen die Haltelamellen 24, 24` von der jeweiligen Seitenwandung 23, 23' wieder schräg in den Innenraum 22a der Schleifkontaktaufnahme 22 hinein. Die freien vorderen Enden Haltelamellen 24, 24` zeigen auf beiden Seitenwandungen 23, 23' in dieselbe Richtung, also von einer in Fig. 6 bis 7 linken stirnseitigen Seitenwandung 25' zu der rechten stirnseitigen Seitenwandung 25.

Vorteil der alternativen Schleifkontaktaufnahme 22 gegenüber der oben beschriebenen Schleifkontaktaufnahme 9 ist, dass beim Herausziehen des Schleifkontakts 8 die in Zustellrichtung Z verlaufenden Haltelamellen 24, 24' nicht gegen ihre Schrägstellung nach oben gebogen werden, sodass sich die Gefahr einer Beschädigung oder eines Abreißens einer der Haltelamellen 12, 12' oder auch eines Teils oder des ganzen Einsteckbereichs 8b des Schleifkontakts 8 vermeiden lässt. Dennoch wird der Schleifkontakt 8 durch die Haltelamellen 24, 24' sicher in der Schleifkontaktaufnahme 22 gehalten, da sich auch die Haltelamellen 24, 24' federelastisch an den Schleifkontakt 8 anlegen und sich aufgrund der Hauptbewegungsrichtung des Stromabnehmers 7 in Längsrichtung L bevorzugt dann gegen die Bewegungsrichtung stemmen, wenn der Schleifkontakt 8 in Fig. 5 bis 8 nach links verfährt.

Abhängig von der Anwendung ist diese Ausgestaltung besonders dann vorteilhaft, wenn der elektrische Verbraucher mit dem Stromabnehmer stets in die gleiche Richtung in Längsrichtung L verfährt, wie es beispielsweise bei Elektroschienenhängebahnen im Bereich von Fertigungsstraßen üblich ist. Dort verfahren die Stromabnehmer in der Regel im Normalbetrieb stets in die gleiche Richtung längs der Fertigungsstraße, sodass hier der Einsatz der in Fig. 5 bis 8 gezeigten alternativen Schleifkontaktaufnahme 22 besonders günstig ist. Die Haltelamellen 24, 24` können dann bevorzugt gegen die Fahrrichtung gerichtet sein, so dass der Schleifkontakt 8 beim Verfahren ständig gegen die Vorderkanten der Haltelamellen 24, 24' gedrückt und somit gut in der Schleifkontaktaufnahme 9 gehalten wird.

Bei Anwendungen hingegen, bei denen der Schleifkontakt 8 oft in wechselnde Fahrrichtung verfahren wird, können die Haltelamellen 24, 24' vorteilhaft auch gegensinnig abgeschrägt sein, also in Fig. 5 bis 8 an der einen Seitenwandung 23 nach rechts und auf der gegenüberliegenden Seitenwandung 23' nach links. Hierdurch wird der Schleifkontakt 8 beim Verfahren in beide Richtungen zumindest gegen die Kanten der j eweils gegen die Fahrrichtung weisenden Haltelamellen 24 bzw. 24' gedrückt.

Ein weiterer Vorteil der alternativen Schleifkontaktaufnahme 22 ist, dass das Herausziehen des Schleifkontaktes 8 bei den in Zustellrichtung Z verlaufenden Haltelamellen 24, 24' auch für das Wartungspersonal einfacher ist.

In beiden Fällen, also der in Längsrichtung L verlaufenden Haltelamellen 12, 12' und der in Zustellrichtung Z verlaufenden Haltelamellen 19, 19` ist festzustellen, dass der Abstand ihrer vorderen Kanten bevorzugt etwas kleiner ist als die Breite W des Schleifkontakts 8 und insbesondere des Einsteckbereichs 8b in Querrichtung Q, sodass beim Einstecken des Schleifkontakts 8 in die Schleifkontaktaufnahme 9 bzw. 22 ein guter mechanischer Halt wie auch eine gute elektrische Verbindung zwischen der Schleifkontaktaufnahme 9 bzw. 22 und den Haltelamellen 12, 12' bzw. 24, 24' hergestellt werden kann. Dies sichert im Betrieb dann auch einen festen Sitz und eine gute elektrische Verbindung des Schleifkontakts 8 mit dem Schleifkontaktanschluss 14, und ermöglicht andererseits einen schnellen Austausch eines abgenutzten oder beschädigten Schleifkontakts 8, ohne den ganzen Stromabnehmer 7 oder den Schleifkontakthalter 9 bzw. 22 umständlich entfernen zu müssen.

Für beide oben gezeigten Ausführungen des Schleifkontakthalters 9 bzw. 22 ist festzustellen, dass sich besonders dann, wenn der Schleifkontakthalter 9 nach außen elektrisch isolierend sein soll, die darin eingebettete Schleifkontaktaufnahme 9 bzw. 22 vorteilhaft ist, da sie vollständig in das Material des Schleifkontakthalters 9 eingegossen oder anderweitig integriert sein kann.

Gegebenenfalls können die Schleifkontaktaufnahmen 9, 22 aber nicht fest eingegossen sein, sondern von oben in den Schleifkontakthalter 9 eingesteckt werden. Hierzu können dann vorteilhaft an den in Längsrichtung vorderen und hinteren Stirnseiten 16, 16' keine Rastvorsprünge 18, 18` vorgesehen werden. Die Schleifkontaktaufnahmen 9, 22 können dann bei entsprechender Ausgestaltung von oben in den Schleifkontakthalter 14 eingeschoben werden, insbesondere wenn die Seitenwandungen 8, 8` bzw. 18, 18` der Schleifkontaktaufnahmen 9 bzw. 22 etwas elastisch aufeinander zu bewegbar sind. Hierzu werden bevorzugt auch bei den Schleifkontaktaufnahmen 9 bzw. 22 die stirnseitigen, also in Querrichtung Q verlaufenden Seitenwandungen 11, 11' bzw. 25, 25' weggelassen, sodass sich im Wesentlichen eine U-Profilform bei Draufsicht aus der Längsrichtung L ergibt.

In einer weiteren alternativen Ausgestaltung können die Schleifkontaktaufnahmen 9 bzw. 22 aber auch unmittelbar als Schleifkontakthalter 14 ausgebildet sein, so dass es keine zusätzlichen, die Schleifkontaktaufnahmen 9 und 22 umgebenden Seitenwandungen 15, 15', 16, 16` bedarf. Dies ist insbesondere dann der Fall, wenn bei geringen Spannungshöhen oder aufgrund der Einbausituation eine elektrische Isolierung des Schleifkontakts 8 durch den Schleifkontakthalter 14 nicht nötig ist. Insofern kann die Fertigung des Schleifkontakthalters 14 dann noch weiter vereinfacht werden, da er dann direkt aus den Schleifkontaktaufnahmen 9 bzw. 22 gebildet sein kann.

Anstelle der in den Zeichnungen gezeigten Vielzahl von Haltelamellen 12, 12' bzw. 24, 24' kann auch eine geringere Anzahl verwendet werden, und auch ihre Ausgestaltung kann anders vorgesehen werden. Beispielsweise kann anstelle der fischgrätartigen Ausgestaltung auch eine Dreieckskonfiguration verwendet werden, bei der die Spitzen der Dreiecke aufeinander zu und zu den Seitenwandungen des Schleifkontakts 8, 8` weisen. Ebenso kann anstelle eines von oben dreiecksförmigen Querschnitts auch ein Trapezquerschnitt oder ein Kreisabschnitt verwendet werden. Vorzugsweise weisen die Haltelamellen jedoch relativ scharfe Kanten auf, wie bei der oben ausführlich beschriebenen Ausgestaltung als fischgrätartige Haltelamellen oder bei einem dreiecksförmigen Querschnitt.

Auch können ggf. nur auf einer der Seitenwandungen 10, 10' bzw. 23, 23` Haltelamellen 12, 12' bzw. 24, 24' vorgesehen sein. Der Abstand dieser Haltelamellen 12, 12' bzw. 24, 24' zur gegenüberliegenden Seitenwandung 10, 10` bzw. 23, 23' ist dann wieder etwas geringer als die Breite W des Einsteckbereichs 8b.

Ggf. können die Ausgestaltungen nach den Figuren 1 bis 4 bzw. 5 bis 8 auch kombiniert werden, beispielsweise in dem auf einer der Seitenwandungen 10, 10' bzw. 23, 23' in Längsrichtung L verlaufende Haltelamellen 12 und auf der gegenüberliegenden Seitenwandung 10', 10 bzw. 23', 23 in Einsteckrichtung Z verlaufende Haltelamellen 24 vorgesehen sein. Ggf. kann auf einer oder beiden Seitenwandungen 10', 10 bzw. 23', 23 in Längsrichtung L auch abschnittsweise die Orientierung der Haltelamellen 12, 12' bzw. 24, 24' geändert werden.

Weiter können die Haltelamellen 12, 12' bzw. 24, 24' vorteilhaft auch schräg zur Längsrichtung L und Einsteckrichtung Z an den Seitenwandungen 10', 10 bzw. 23`, 23 verlaufen.

Ggf. können alternativ oder zusätzlich an den stirnseitigen Wandungen 11, 11' des Innenraums 9a bzw. 22a der Schleifkontaktaufnahme 9 bzw. 22 Haltelamellen angeordnet oder ausgebildet sein, welche ansonsten wie die oben beschriebenen Haltelamellen 12, 12' bzw. 24, 24' ausgebildet sind. Dabei ist dann der Abstand der unbelasteten stirnseitigen Haltelamellen 11, 11' wiederum etwas kleiner als die Länge des Einsteckbereichs 8b in Längsrichtung L. Auch hier können die oben beschriebenen Kombinationen unterschiedlicher Ausrichtungen der Haltelamellen übernommen, werden, beispielsweise können die stirnseitigen Haltelamellen in Einsteckrichtung Z verlaufen, während die Haltelamellen 12, 12'an den Seitenwandungen 10', 10 in Längsrichtung L verlaufen. Auch ist vorstellbar, dass Haltelamellen nur an einer, zwei, drei oder allen Seiten 15, 15', 16, 16`der Schleifkontaktaufnahme 9 bzw. 22 vorgesehen sind.

In einer weiteren alternativen Ausgestaltung können sich die in Längsrichtung L verlaufenden Längsseitenwandungen des Schleifkontakts 8 im Einsteckbereich 8b auch nach unten hin verjüngen, sodass die sich Seitenwandungen 10, 10' bzw. 23, 23` der Schleifkontaktaufnahme 9 bzw. 22 ebenfalls entsprechend nach unten hin verjüngen und/oder zumindest die Haltelamellen 12, 12' nach unten hin weiter nach innen reichen. Hierdurch kann das Einstecken des Einsteckbereichs 8b des Schleifkontakts 8 in die Schleifkontaktaufnahme 9 vereinfacht werden.

Die Haltelamellen 12, 12' können in der Längsrichtung L unterbrochen sein, wobei vorteilhaft einander benachbarte Haltelamellen 12, 12' an in Längsrichtung L unterschiedlichen Stellen unterbrochen sein können.

### Bezugszeichenliste

- 1: Schleifleitungssystem
- 2: Schleifleitung
- 3: Leiterprofil
- 4: trogförmiger Schleifabschnitt
- 5: Isolierprofil
- 6: Längsschlitz
- 7: Stromabnehmer
- 8: Schleifkontakt
- 8a: Schleifbereich Schleifkontakt
- 8b: Einsteckbereich Schleifkontakt
- 9: Schleifkontaktaufnahme
- 9a: Innenraum Schleifkontaktaufnahme
- 10, 10`: Seitenwandungen Schleifkontaktaufnahme in Längsrichtung
- 11, 11': stirnseitige Wandungen Schleifkontaktaufnahme
- 12, 12': Haltelamellen in Längsrichtung
- 13: Boden der Schleifkontaktaufnahme
- 14: Schleifkontakthalter
- 15, 15': Seitenwandungen Schleifkontakthalter
- 16, 16': stirnseitige Wandungen Schleifkontakthalter
- 17, 17': längsseitige Rastvorsprünge Schleifkontakthalter
- 18, 18`: stirnseitige Rastvorsprünge Schleifkontakthalter
- 19: Schleifkontaktanschluss
- 20: Anschlusselement
- 21, 21': Ausnehmungen für Ausziehwerkzeug
- 22: alternative Schleifkontaktaufnahme
- 22a: Innenraum alternative Schleifkontaktaufnahme
- 23, 23': Seitenwandungen Schleifkontaktaufnahme
- 24, 24': Haltelamellen in Zustellrichtung
- 25, 25`: stirnseitige Wandungen Schleifkontaktaufnahme
- L: Längsrichtung Schleifleitung, Stromabnehmer bzw. Schleifkontaktaufnahme
- Q: Querrichtung
- W: Breite des Schleifkontakts quer zur Längsrichtung und Zustellrichtung
- Z: Zustellrichtung bzw. Einsteckrichtung Schleifkontakt, Höhenrichtung Schleifkontaktaufnahme

## Patentansprüche

1. Schleifkontakthalter (14) zur Aufnahme eines längs einer Schleifleitung (2) in deren Längsrichtung (L) verfahrbaren und die Schleifleitung (2) elektrisch kontaktierenden Schleifkontakts (8), der Schleifkontakthalter (14) weist mindestens einen Schleifkontaktanschluss (19) zur elektrischen Verbindung mit einem Anschlusselement (20) eines längs der Schleifleitung (2) verfahrbaren elektrischen Verbrauchers auf, wobei der Schleifkontakthalter (14) eine Schleifkontaktaufnahme (9; 22) mit einem Innenraum (9a; 22a) zur Aufnahme zumindest eines Teils eines Einsteckbereichs (8b) des Schleifkontakts (8) aufweist, und wobei die Schleifkontaktaufnahme (9; 22) in den Innenraum (9a; 22a) ragende Haltelamellen (12, 12; 24, 24') zur lösbaren Halterung des Schleifkontakts (8) in der Schleifkontaktaufnahme (9a; 22a) aufweist, **dadurch gekennzeichnet, dass** freie Enden der Haltelamellen (12, 12'; 24, 24') schräg in den von der Schleifkontaktaufnahme (9; 22) umgebenen Innenraum (9a; 22a) ragen, wobei benachbarte Haltelamellen (12, 12'; 24, 24') zueinander parallel verlaufen.

2. Schleifkontakthalter (14) nach Anspruch 1, **dadurch gekennzeichnet, dass** die freie Enden der Haltelamellen (12, 12`; 24, 24') entgegen einer Einsteckrichtung (Z) des Schleifkontakts (8) in die Schleifkontaktaufnahme (9) schräg in den von der Schleifkontaktaufnahme (9; 22) umgebenen Innenraum (9a; 22a) ragen.

3. Schleifkontakthalter (14) nach einem der voranstehenden Ansprüche, **dadurch gekennzeichnet, dass** die freien Enden der Haltelamellen (12, 12'; 24, 24') scharfkantig sind.

4. Schleifkontakthalter (14) nach einem der voranstehenden Ansprüche, **dadurch gekennzeichnet, dass** die Haltelamellen (12, 12`; 24, 24') fischgrätartig in den Innenraum (9a; 22a) ragen, insbesondere also in einer Höhenrichtung (Z) der Schleifkontaktaufnahme (9) übereinander oder in der Zustellrichtung bzw. Einsteckrichtung des Schleifkontakts (8) bzw. der Höhenrichtung (Z) der Schleifkontaktaufnahme (22) nebeneinander angeordnet sind, und/oder dass freie Enden der Haltelamellen (12, 12`; 24, 24') zur Anlage an den Schleifkontakt (8) ausgebildet sind.

5. Schleifkontakthalter (14) nach einem der voranstehenden Ansprüche, **dadurch gekennzeichnet, dass** die Haltelamellen (12, 12'; 24, 24') auf mindestens einer Seitenwandung (10, 10'; 23, 23') des Innenraums (9a; 22a) der Schleifkontaktaufnahme (9; 22) angeordnet sind.

6. Schleifkontakthalter (14) nach Anspruch 5, **dadurch gekennzeichnet, dass** auf einer der mindestens einen Seitenwandung (10, 10'; 23, 23') gegenüberliegenden Seitenwandung (10, 10'; 23, 23') des Innenraums (9a; 22a) der Schleifkontaktaufnahme (9; 22) weitere in den Innenraum (9a; 22a) ragende Haltelamellen (12, 12'; 24, 24') angeordnet sind.

7. Schleifkontakthalter (14) nach einem der Ansprüche 1 bis 6, **dadurch gekennzeichnet, dass** die Haltelamellen (12, 12) in eine zur Längsrichtung (L) des die Schleifleitung (2) kontaktierenden Schleifkontakts (8) parallelen Richtung verlaufen.

8. Schleifkontakthalter (14) nach einem der Ansprüche 1 bis 6, **dadurch gekennzeichnet, dass** die Haltelamellen (24, 24') in einer zur Einsteckrichtung des Schleifkontakts (8) in die Schleifkontaktaufnahme (22) parallelen Richtung verlaufen.

9. Schleifkontakthalter (14) nach einem der voranstehenden Ansprüche, **dadurch gekennzeichnet, dass** bei nicht eingestecktem Schleifkontakt (8) der Abstand zwischen auf einander gegenüberliegenden Seiten des Innenraums (9a; 22a) angeordneten Haltelamellen (12, 12'; 24, 24') oder zwischen einer Seite des Innenraums (9a; 22a) und auf der gegenüberliegenden Seite des Innenraums (9a; 22a) angeordneten Haltelamellen (12, 12`; 24, 24') kleiner ist als die Breite (W) des Einsteckbereichs (8b) quer zur und/oder in Längsrichtung (L).

10. Schleifkontakthalter (14) nach einem der voranstehenden Ansprüche, **dadurch gekennzeichnet, dass** die Schleifkontaktaufnahme (9; 22) und/oder die Haltelamellen (12, 12'; 24, 24') aus einem elektrisch leitfähigen Material bestehen, und/oder dass die Haltelamellen (12, 12'; 24, 24') elastisch sind, und/oder dass die Haltelamellen (12, 12; 24, 24') aus einem Material bestehen, welches härter ist als das Material, aus dem der Schleifkontakt (8) besteht.

11. Schleifkontakthalter (14) nach einem der voranstehenden Ansprüche, **dadurch gekennzeichnet, dass** die Schleifkontaktaufnahme (9; 22) und die Haltelamellen (12, 12'; 24, 24') einstückig ausgebildet sind, und/oder dass der Schleifkontakthalter (14) aus einem elektrisch leitfähigen Material oder aus einem elektrisch isolierenden Material, insbesondere Kunststoff besteht.

12. Stromabnehmer (7), mit mindestens einem Schleifkontakthalter (14) zur Aufnahme eines zur schleifenden elektrischen Kontaktierung mit der Schleifleitung (2) vorgesehenen Schleifkontakts (8), **dadurch gekennzeichnet, dass** der Schleifkontakthalter (14) nach einem der Ansprüche 1 bis 11 ausgebildet ist.

13. Schleifleitungssystem (1) mit einer in eine Längsrichtung (L) verlaufenden Schleifleitung (2) und einem längs daran verfahrbaren Stromabnehmer (7) zur elektrischen Versorgung eines längs der Schleifleitung (2) bewegbaren elektrischen Verbrauchers, **dadurch gekennzeichnet, dass** der Stromabnehmer (7) nach Anspruch 12 ausgebildet ist.

## Claims

1. Sliding contact holder (14) for receiving a sliding contact (8) movable along a conductor rail (2) in the longitudinal direction (L) thereof and electrical contacting the conductor rail (2), the sliding contact holder (14) has at least one sliding contact connector (19) for electrical connection to a connector element (20) of an electrical consumer movable along the conductor rail (2), the sliding contact holder (14) having a sliding contact receptacle (9; 22) with an interior space (9a; 22a) for receiving at least part of an insertion region (8b) of the sliding contact (8), and wherein the sliding contact holder (9; 22) has retaining slats (12, 12; 24, 24') projecting into the interior space (9a; 22a) for releasably retaining the sliding contact (8) in the sliding contact holder (9a; 22a), **characterised in that** free ends of the retaining slats (12, 12'; 24, 24') project inclined into the interior space (9a; 22a) surrounded by the sliding contact receptacle (9; 22), wherein adjacent retaining slats (12, 12'; 24, 24') extend parallel to one another.

2. Sliding contact holder (14) according to claim 1, **characterised in that** the free ends of the retaining slats (12, 12'; 24, 24') project inclined into the interior space (9a; 22a) surrounded by the sliding contact holder (9; 22) against an insertion direction (Z) of the sliding contact (8) into the sliding contact holder (9).

3. Sliding contact holder (14) according to one of the preceding claims, **characterised in that** the free ends of the retaining slats (12, 12'; 24, 24') are sharp-edged.

4. Sliding contact holder (14) according to one of the preceding claims, **characterised in that** the holding slats (12, 12'; 24, 24') project into the interior space (9a; 22a) in the manner of a herringbone, in particular one above the other in a height direction (Z) of the sliding contact holder (9) or next to each other in the feed direction or insertion direction of the sliding contact (8) or the height direction (Z) of the sliding contact holder (22) and/or that free ends of the retaining slats (12, 12'; 24, 24') are designed to bear against the sliding contact (8).

5. Sliding contact holder (14) according to one of the preceding claims, **characterised in that** the retaining slats (12, 12'; 24, 24') are arranged on at least one side wall (10, 10'; 23, 23') of the interior space (9a; 22a) of the sliding contact holder (9; 22).

6. Sliding contact holder (14) according to claim 5, **characterised in that** further retaining slats (12, 12'; 24, 24') projecting into the interior space (9a; 22a) are arranged on a side wall (10, 10'; 23, 23') of the interior space (9a; 22a) of the sliding contact holder (9; 22) opposite the at least one side wall (10, 10'; 23, 23').

7. Sliding contact holder (14) according to one of claims 1 to 6, **characterised in that** the retaining slats (12, 12') extend in a direction parallel to the longitudinal direction (L) of the sliding contact (8) contacting the conductor rail (2).

8. Sliding contact holder (14) according to one of claims 1 to 6, **characterised in that** the retaining slats (24, 24') extend in a direction parallel to the insertion direction of the sliding contact (8) into the sliding contact holder (22).

9. Sliding contact holder (14) according to one of the preceding claims, **characterised in that**, when the sliding contact (8) is not inserted, the distance between retaining slats (12, 12'; 24, 24') or between one side of the interior space (9a; 22a) and retaining slats (12, 12'; 24, 24') arranged on the opposite side of the interior space (9a; 22a) is smaller than the width (W) of the insertion region (8b) transverse to and/or in the longitudinal direction (L).

10. Sliding contact holder (14) according to one of the preceding claims, **characterised in that** the sliding contact holder (9; 22) and/or the retaining slats (12, 12'; 24, 24') consist of an electrically conductive material, and/or **in that** the retaining slats (12, 12'; 24, 24') are elastic, and/or **in that** the retaining slats (12, 12; 24, 24') consist of a material which is harder than the material of which the sliding contact (8) consists.

11. Sliding contact holder (14) according to one of the preceding claims, **characterised in that** the sliding contact holder (9; 22) and the retaining slats (12, 12'; 24, 24') are formed in one piece, and/or **in that** the sliding contact holder (14) consists of an electrically conductive material or of an electrically insulating material, in particular plastic.

12. Current collector (7), having at least one sliding contact holder (14) for receiving a sliding contact (8) provided for sliding electrical contacting with the conductor rail (2), **characterised in that** the sliding contact holder (14) is designed according to one of claims 1 to 11.

13. Conductor rail system (1) with a conductor rail (2) extending in a longitudinal direction (L) and a current collector (7) movable longitudinally therealong for the electrical supply of an electrical consumer movable along the conductor rail (2), **characterised in that** the current collector (7) is designed according to claim 12.

## Revendications

1. Support de contact à frottement (14) pour la réception d'un contact à frottement (8) déplaçable le long d'une ligne de contact (2) dans la direction longitudinale (L) de celle-ci et électriquement en contact avec la ligne de contact (2), le support de contact à frottement (14) présente au moins un raccord de contact à frottement (19) pour la connexion électrique à un élément de raccordement (20) d'un consommateur électrique déplaçable le long de la ligne de contact (2), dans lequel le support de contact à frottement (14) présente un logement de contact à frottement (9 ; 22) avec un espace intérieur (9a ; 22a) pour la réception au moins d'une partie d'une zone d'introduction (8b) du contact à frottement (8), et dans lequel le logement de contact à frottement (9 ; 22) présente des lamelles de retenue (12, 12 ; 24, 24') faisant saillie dans l'espace intérieur (9a ; 22a) pour la retenue libérable du contact à frottement (8) dans le logement de contact à frottement (9a ; 22a), **caractérisé en ce que** les extrémités libres des lamelles de retenue (12, 12' ; 24, 24') font saillie de manière inclinée dans l'espace intérieur (9a ; 22a) entouré par le logement de contact à frottement (9 ; 22), dans lequel les lamelles de retenue (12, 12' ; 24, 24') voisines s'étendent parallèlement les unes aux autres.

2. Support de contact à frottement (14) selon la revendication 1, **caractérisé en ce que** les extrémités libres des lamelles de retenue (12, 12' ; 24, 24') font saillie à l'encontre d'une direction d'introduction (Z) du contact à frottement (8) dans le logement de contact à frottement (9) de manière inclinée dans l'espace intérieur (9a ; 22a) entouré par le logement de contact à frottement (9 ; 22).

3. Support de contact à frottement (14) selon l'une quelconque des revendications précédentes, **caractérisé en ce que** les extrémités libres des lamelles de retenue (12, 12' ; 24, 24') sont à arêtes vives.

4. Support de contact à frottement (14) selon l'une quelconque des revendications précédentes, **caractérisé en ce que** les lamelles de retenue (12, 12' ; 24, 24') font saillie à la façon d'une arête de poisson dans l'espace intérieur (9a ; 22a), en particulier par conséquent sont disposées les unes au-dessus des autres dans une direction de hauteur (Z) du logement de contact à frottement (9) ou les unes à côté des autres dans la direction d'avance ou direction d'introduction du contact à frottement (8) ou la direction de hauteur (Z) du logement de contact à frottement (22), et/ou que les extrémités libres des lamelles de retenue (12, 12' ; 24, 24') sont réalisées pour être en appui sur le contact à frottement (8).

5. Support de contact à frottement (14) selon l'une quelconque des revendications précédentes, **caractérisé en ce que** les lamelles de retenue (12, 12' ; 24, 24') sont disposées sur au moins une paroi latérale (10, 10' ; 23, 23') de l'espace intérieur (9a ; 22a) du logement de contact à frottement (9 ; 22) .

6. Support de contact à frottement (14) selon la revendication 5, **caractérisé en ce que** d'autres lamelles de retenue (12, 12' ; 24, 24') faisant saillie dans l'espace intérieur (9a ; 22a) sont disposées sur une paroi latérale (10, 10' ; 23, 23') de l'espace intérieur (9a ; 22a) du logement de contact à frottement (9 ; 22) opposée à la au moins une paroi latérale (10, 10' ; 23, 23').

7. Support de contact à frottement (14) selon l'une quelconque des revendications 1 à 6, **caractérisé en ce que** les lamelles de retenue (12, 12) s'étendent dans une direction parallèle à la direction longitudinale (L) du contact à frottement (8) en contact avec la ligne de contact (2).

8. Support de contact à frottement (14) selon l'une quelconque des revendications 1 à 6, **caractérisé en ce que** les lamelles de retenue (24, 24') s'étendent dans une direction parallèle à la direction d'introduction du contact à frottement (8) dans le logement de contact à frottement (22).

9. Support de contact à frottement (14) selon l'une quelconque des revendications précédentes, **caractérisé en ce que** lorsque le contact à frottement (8) n'est pas introduit la distance entre les lamelles de retenue (12, 12' ; 24, 24') disposées sur les faces opposées les unes aux autres de l'espace intérieur (9a ; 22a) ou entre une face de l'espace intérieur (9a ; 22a) et les lamelles de retenue (12, 12' ; 24, 24') disposées sur la face opposée de l'espace intérieur (9a ; 22a) est inférieure à la largeur (W) de la zone d'introduction (8b) transversalement par rapport à et/ou dans la direction longitudinale (L).

10. Support de contact à frottement (14) selon l'une quelconque des revendications précédentes, **caractérisé en ce que** le logement de contact à frottement (9 ; 22) et/ou les lamelles de retenue (12, 12' ; 24, 24') sont constitués d'un matériau électroconducteur, et/ou que les lamelles de retenue (12, 12' ; 24, 24') sont élastiques, et/ou que les lamelles de retenue (12, 12 ; 24, 24') sont constituées d'un matériau, lequel est plus dur que le matériau dont est constitué le contact à frottement (8) .

11. Support de contact à frottement (14) selon l'une quelconque des revendications précédentes, **caractérisé en ce que** le logement de contact à frottement (9 ; 22) et les lamelles de retenue (12, 12' ; 24, 24') sont réalisés d'une seule pièce, et/ou que le support de contact à frottement (14) est constitué d'un matériau électriquement conducteur ou d'un matériau électriquement isolant, en particulier de matière plastique.

12. Pantographe (7), avec au moins un support de contact à frottement (14) pour la réception d'un contact à frottement (8) destiné à être mis en contact électrique frottant avec la ligne de contact (2), **caractérisé en ce que** le support de contact à frottement (14) est réalisé selon l'une quelconque des revendications 1 à 11.

13. Système de ligne de contact (1) avec une ligne de contact (2) s'étendant dans une direction longitudinale (L) et un pantographe (7) déplaçable le long de celle-ci pour l'alimentation électrique d'un consommateur électrique mobile le long de la ligne de contact (2), **caractérisé en ce que** le pantographe (7) est réalisé selon la revendication 12.
